Europäisches Patentamt

European Patent Office

Office européen des brevets

(19)

(11) Numéro de publication: **0 096 599**
**B1**

# FASCICULE DE BREVET EUROPEEN

(45) Date de publication du fascicule du brevet:
**08.10.86**

(21) Numéro de dépôt: **83400842.7**

(22) Date de dépôt: **28.04.83**

(51) Int. Cl.⁴: **G 07 F 7/10, H 04 L 9/02**

(54) **Procédé pour authentifier ou certifier au moins une information contenue dans une mémoire d'un support électronique, notamment amovible et portatif tel qu'une carte.**

(30) Priorité: **14.05.82 FR 8208405**

(43) Date de publication de la demande:
**21.12.83 Bulletin 83/51**

(45) Mention de la délivrance du brevet:
**08.10.86 Bulletin 86/41**

(84) Etats contractants désignés:
**DE FR IT SE**

(56) Documents cités:
**EP - A - 0 028 965**
**EP - A - 0 029 894**
**GB - A - 2 020 513**
**US - A - 4 193 061**
**US - A - 4 278 837**

(73) Titulaire: **CII HONEYWELL BULL, 94 Avenue Gambetta P.C. OW009, F-75020 Paris (FR)**

(72) Inventeur: **Ugon, Michel, 94 avenue Gambetta, F-75960 Paris Cedex 20 (FR)**

(74) Mandataire: **Doireau, Marc et al, CII-Honeywell Bull 94, avenue Gambetta Boîte Postale 33, F-75960 Paris cedex 20 (FR)**

ACTORUM AG

## Description

L'invention concerne généralement les problèmes relatifs au contrôle de la validité de données enregistrées dans une mémoire d'un support électronique, et a plus particulièrement pour objet un procédé pour authentifier ou certifier au moins une information contenue dans une mémoire d'un support électronique, notamment amovible et portatif tel qu'une carte, pour enlever à un fraudeur toute possibilité d'intervenir dans le dialogue entre un appareil dénommé appareil de transaction et une carte connectée à cet appareil, en tentant de laisser croire à l'appareil de transaction que le dialogue s'est opéré tout à fait normalement.

On connait des systèmes fondés sur l'utilisation de supports électroniques amovibles qui permettent d'habiliter des personnes ou des organismes à effectuer des opérations protégées propres aux applications envisagées.

D'une façon générale, chaque application revient à permettre à un détenteur d'une carte d'accéder à un service protégé, ce qui impose nécessairement de lire et/ou d'écrire des informations dans la mémoire de la carte pour valider l'accès au service demandé et pour éventuellement garder trace de cet accès matérialisé par exemple par un débit d'une somme d'argent inscrit dans la carte dès l'instant où le service est payant.

Compte tenu de la diversification des applications que peuvent couvrir ces systèmes (transactions bancaires, accès à des réseaux, à des banques de données, à des services, à des enceintes protégées, ...), des modifications ou perfectionnements sont sans cesse apportés à ces systèmes, ne serait-ce que pour tenir compte des caractéristiques propres à chaque application.

Dès l'instant où intervient une notion d'accès protégé ou de service protégé, il faut obligatoirement associer à cette notion la notion de fraude. En effet, le détenteur d'une carte ne pourra pas s'empêcher de se poser les questions suivantes:
– dans le cas d'un service payant, n'est-il pas possible, dans certains cas, d'accéder à ce service gratuitement?, et
– n'est-il pas possible avec la carte d'accéder à des services auxquels je n'ai normalement pas accès?

Pour pallier ces tentatives de fraude, une amélioration très importante a consisté à utiliser des mots de passe aléatoires et fugitifs de façon à empêcher un fraudeur de reproduire une séquence de dialogue antérieur entre l'appareil de transaction et la carte connectée à cet appareil, et ayant permis un accès licite à une enceinte ou à un service. Une telle amélioration est décrite dans le document EP-A1 0 028 965 de la Demanderesse et intitulé «Procédé et système d'identification de personnes demandant l'accès à certains milieux».

Ce système comprend une carte, ayant une mémoire et des circuits de traitement, accouplée à un appareil comportant également une mémoire et des circuits de traitement. Ces mémoires contiennent des informations, notamment un code d'identification qui est utilisé dans la procédure d'accès.

Un tel système ne nécessite pas au cours de son utilisation d'écrire de nouvelles informations dans la mémoire de la carte ou de tester la présence d'une information dans la carte pour vérifier qu'elle a bien été écrite. D'une façon générale, l'interface entre l'appareil de transaction et le support électronique est particulièrement vulnérable à l'observation et à la simulation par des spécialistes, dès lors qu'il y a possibilité de déviation du dialogue vers un organe possédant la capacité de générer une séquence plausible. Plus précisémment, un fraudeur averti, pourrait, en générant une séquence d'informations copiées sur les précédentes, créer des signaux ayant pour but de faire croire à l'appareil distant que les opérations ont bien lieu en relation avec un support électronique dûment habilité.

L'invention a pour but d'éliminer cet inconvénient grâce à l'introduction d'une donnée dépendant du mot à lire et de sa position dans la mémoire du support électronique. Cette précaution permet de s'assurer de l'origine d'une donnée qui transite sur la liaison entre l'appareil de transaction et le support, et ce, même si l'appareil de transaction et le support, et ce, même si l'appareil est très distant du support ce qui est indispensable dans des applications domestiques non surveillées in situ.

L'invention propose donc un procédé pour certifier la présence d'une information déterminée dans une position déterminée d'une mémoire d'un support électronique, tel qu'une carte amovible et portative, comprenant également un circuit de traitement et accouplée pour échanger des messages avec un appareil comprenant un circuit de traitement et une mémoire contenant ladite information déterminée, caractérisé en ce qu'il consiste:
– à générer dans l'appareil un paramètre représentatif de la position dans laquelle est inscrite l'information dans la mémoire du support électronique,
– à transmettre ce paramètre représentatif de la position de mémoire au support électronique,
– à faire exécuter par les circuits de traitement du support électronique et de l'appareil un même programme inaccessible de l'extérieur et préenregistré dans le support et l'appareil, ce programme déroulant un algorithme prenant en compte au moins un paramètre corrélé à l'information à certifier et le paramètre représentatif de la position en mémoire dans le support électronique de cette information et aboutissant à un résultat au niveau du support et à un résultat au niveau de l'appareil,
– à comparer dans l'appareil ou dans le support les deux résultats, l'identité de ces résultats prouvant la présence de l'information déterminée dans la position de mémoire déterminée du support électronique.

Avantageusement, le procédé conforme à l'invention consiste à donner au paramètre corrélé à l'information à certifier la valeur de ladite information, et à donner au paramètre représentatif de la position de mémoire la valeur de l'adresse mémoire de l'information à certifier dans le support électronique.

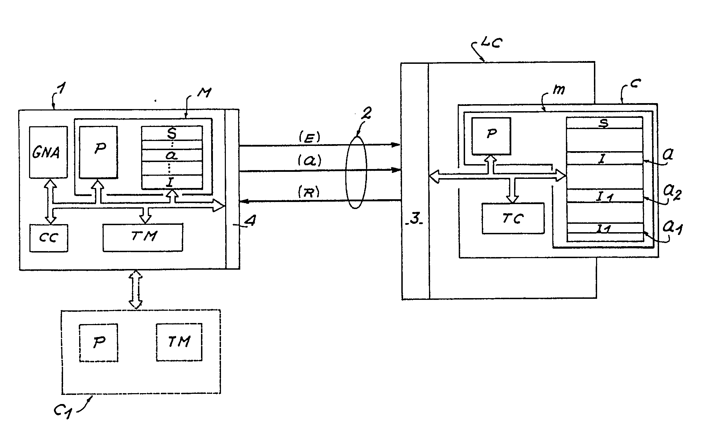

D'autres caractéristiques, avantages et détails ressortiront de la description explicative qui va suivre faite en référence au dessin schématique annexé donné uniquement à titre d'exemple et illustrant les éléments essentiels d'un appareil de transaction et d'une carte connectée à cet appareil pour montrer le principe et la mise en oeuvre du procédé conforme à l'invention.

En se référant au dessin, il a été représenté un appareil (1) dénommé appareil de transaction auquel peut être connecté un support amovible portatif tel qu'une carte (C). L'appareil (1) et la carte (C) sont reliés par l'intermédiaire d'une liaison de transmission (2). Une telle liaison est notamment décrite dans le brevet français FR-A-2 483 713 au nom de la Demanderesse et intitulé: «Dispositif pour la transmission de signaux entre deux stations de traitement de l'information».

L'appareil de transaction (1) comprend au moins une mémoire (M) et des circuits de traitement (TM) de données, de façon à exécuter un programme (P) préalablement enregistré dans la mémoire (M) et dont le déroulement permet d'exécuter un algorithme aboutissant à un résultat (R') à partir de paramètres qui seront définis plus loin.

La carte (C) contient également au moins une mémoire (m) et des circuits de traitement (TC) de données, de façon à exécuter le même programme (P) préalablement enregistré dans la mémoire (m) et dont le déroulement permet d'exécuter le même algorithme précité en donnant un résultat (R) en fonction de paramètres qui seront définis plus loin.

L'appareil de transaction (1) permet à un certain nombre d'individus constituant une population d'accéder à au moins un service protégé. Tous les individus de cette population sont détenteur d'une carte (C) pour accéder à ce service. A la limite, une seule carte peut être à la disposition de cette population.

D'une façon générale et plus particulièrement dans l'exemple qui va être décrit, l'accès à ce service va donner lieu à des opérations de lecture et d'écriture dans la carte (C) et à des opérations de calcul par les circuits de traitement (TM; TC) de l'appareil (1) et de la carte (C) conformément au procédé conforme à l'invention.

Soit un individu désirant bénéficier d'un service par l'intermédiaire de sa carte (C). Cette carte (C) est accouplée en local ou à distance avec l'appareil de transaction (1) qui va valider et matérialiser le service rendu à cet individu. La carte (C) est par exemple introduite dans un lecteur de carte (LC) relié à l'appareil de transaction (1) par l'intermédiaire de la ligne de transmission (2) et de deux interfaces (3, 4) prévus respectivement au niveau du lecteur (LC) et de l'appareil (1).

Après l'initialisation du système, le lecteur (LC) ayant par exemple vérifié que la carte est bien détenue par un individu habilité, il va s'établir un dialogue entre l'appareil (1) et la carte (C).

On suppose qu'au cours de ce dialogue, l'appareil de transaction (1) désire certifier une information (I) contenue dans la mémoire (m) de la carte (C). Autrement dit, l'appareil de transaction (1) veut s'assurer qu'une information (I) communiquée par la carte (C) est bien celle qui est contenue à une adresse déterminée dans la mémoire (m) ou qu'une information (I) qu'il a précédemment écrite dans la mémoire (m) est bien écrite à l'adresse qu'il a spécifiée.

En conclusion, il s'agit de certifier une information (I) enregistrée à l'adresse (a) de la mémoire (m) de la carte (C).

Une telle certification s'effectue par l'exécution successive des opérations suivantes:

1. un générateur de nombres aléatoires (GNA) prévu par exemple dans l'appareil de transaction (1) délivre un nombre aléatoire (E) qui est transmis à la carte (C);

2. l'appareil de transaction (1) envoie également à la carte (C), l'adresse (a) de l'information (I) à certifier, cette adresse (a) ainsi que l'information (I) contenue à cette adresse (a) dans la mémoire (m) de la carte étant, bien évidemment, connues de l'appareil de transaction et enregistrées dans sa mémoire (M);

3. la carte (C) déroule ensuite le programme (P) par l'intermédiaire de ses circuits de traitement (TC) pour exécuter un algorithme aboutissant au calcul d'un résultat (R) à partir des paramètres suivants: (E), (a), (I) et (S): où (E) est le nombre aléatoire précité; (a) une adresse de la mémoire (m); (I) l'information contenue à cette adresse (a); (S) étant un code secret spécifique du service demandé et enregistré à la fois au niveau de la carte (C) et de l'appareil de transaction (1), ce code secret étant inconnu du détenteur de la carte et inaccessible de l'extérieur ainsi que le programme (P);

4. l'appareil de transaction (1) déroule également le programme (P) par l'intermédiaire de ses circuits de traitement (TM) pour exécuter le même algorithme aboutissant au calcul d'un résultat (R') à partir des paramètres précités (E), (a), (I) et (S);

5. la carte (C) transmet son résultat (R) à l'appareil de transaction (1) qui, par l'intermédiaire d'un circuit de comparaison (CC), le compare avec le résultat (R').

S'il y a identité entre les deux résultats (R) et (R'), l'information (I) a été certifiée par l'appareil (1), c'est-à-dire que cette information (I) est non seulement exacte dans son contenu, mais également bien inscrite à l'adresse (a) de la mémoire (m) de la carte (C).

Il va être donné ci-dessous un exemple justifiant l'intérêt de l'invention.

Supposons qu'un individu porteur d'une carte (C) demande l'accès à un service protégé et que ce service soit payant, ce qui se traduira par l'inscription dans la mémoire (m) de la carte (C) d'une somme d'argent pour garder trace de l'accès à ce service.

En conséquence, l'appareil de transaction (1) doit écrire cette somme d'argent dans la carte (C), somme d'argent qui correspond à l'information (I) précédente.

Supposons terminée cette opération d'écriture de l'information (I) à l'adresse (a) de la mémoire (m) de la carte (C), cette adresse (a) étant par exemple le premier emplacement mémoire libre.

Il est important, voire indispensable, que l'appareil de transaction (1) vérifie que l'information (I) a été effectivement bien écrite à l'adresse (a) de la mémoire (m) de la carte (C). Cela revient à certifier l'information (I) en effectuant la suite des opérations de certification décrites précédemment et aboutissant à la comparaison des deux résultats (R) et (R') précités.

Un tel procédé permet d'éviter une tentative de fraude par l'individu porteur de la carte (C). En effet, cet individu dénommé fraudeur, peut être tenté de faire croire que l'information (I) est bien enregistrée à l'adresse (a), alors qu'en réalité il s'est arrangé pour la faire écrire à une autre adresse ou à l'extérieur de la carte (C). Sans faire intervenir les adresses, une telle opération est parfaitement possible par un spécialiste. Par contre, en faisant intervenir l'adresse (a) de l'information (I), la fraude n'est plus possible pour les raisons suivantes.

Cette adresse (a), le nombre aléatoire (E) et le résultat (R) sont les seules données accessibles au fraudeur, c'est-à-dire les données circulant sur la ligne de transmission (2). Cependant, il est important de noter que le fraudeur ne connaît pas le mode de calcul du résultat (R), puisque celui-ci est effectué à l'intérieur de la carte (C) par le programme (P) inaccessible de l'extérieur et par conséquent secret.

Si le fraudeur modifie l'adresse (a), le résultat (R) calculé à l'intérieur de la carte (C) sera obligatoirement différent du résultat (R') calculé par l'appareil de transaction (1) qui, lui, prend en compte l'adresse (a) et non l'adresse modifiée. Ainsi, même si le fraudeur a pu écrire, par un moyen quelconque, l'information (I) à une adresse autre que l'adresse (a), l'appareil de transaction (1) pourra déceler une telle fraude, c'est-à-dire qu'il pourra être certain que l'information (I) n'a pas été écrite à l'adresse (a).

Dans ces conditions, le fraudeur pourra être tenté de communiquer lui-même le résultat (R) normalement calculé à l'intérieur de la carte (C) et prenant en compte l'adresse (a), sachant que la carte (C) calculera un résultat (R) différent qui prendra en compte l'adresse modifiée nécessairement communiquée par le fraudeur à la carte (C) pour que celle-ci écrive l'information (I) à cette adresse modifiée. Pour cela, il faudrait que le fraudeur puisse calculer ou connaître à l'avance le résultat (R) correspondant à l'adresse (a), mais cela est impossible puisqu'il ne connait pas le mode de calcul de ce résultat tel que défini par le programme (P) inscrit dans la mémoire (m) de la carte (C) et inaccessible de l'extérieur.

Un cas particulier est intéressant à décrire, lorsque l'appareil de transaction (1) veut écrire une information ($I_1$) à une adresse ($a_1$) et que le fraudeur sait à l'avance qu'une information identique a déjà été écrite à une adresse ($a_2$). Dans ce case, le fraudeur sera tenté de faire réécrire l'information ($I_1$) à l'adresse ($a_2$) surtout si cette information représente un débit bancaire. Une telle fraude est également impossible du fait que les deux informations ($I_1$) sont différenciées par leurs adresses respectives ($a_1$) et ($a_2$).

Il est certain que certaines précautions sont également à prendre au niveau de l'appareil de transaction (1) dont la mémoire (M) contient le programme (P). Dans la mesure où cet appareil se trouve dans une enceinte protégée, il n'est pas nécessaire, a priori, de prendre des précautions particulières.

Cependant, dans certains cas, il sera préférable d'enregistrer le programme (P) dans un support électronique ($C_1$) par exemple de même nature que la carte (C). Dans ces conditions, il faudra valider l'exécution du programme (P) au niveau de l'appareil de transaction (1) par la fourniture d'un code secret déterminé connu de l'opérateur de l'appareil de transaction et testé par la carte ($C_1$) accouplée à l'appareil de transaction (1). Ce type de carte est notamment décrite dans le brevet français FR-A-2 401 459 et dans la demande de brevet français FR-A-2 461 301 de la demanderesse.

Si le programme (P) est enregistré dans une carte ($C_1$) au niveau de l'appareil de transaction (1), l'exécution de ce programme nécéssiterait l'introduction dans la carte ($C_1$) de l'information (I) à certifier et il faudrait que l'information (I) soit inscrite dans la carte ($C_1$) à une adresse (a) qui soit la même que celle de la mémoire (m) de la carte (C). Dans ces conditions, il est plus simple de considérer au niveau de la carte ($C_1$), l'information (I) à certifier comme une information externe entrée dans la carte ($C_1$) par l'opérateur.

**Revendications**

1. Procédé pour certifier la présence d'une information déterminée (I) dans une position déterminée d'une mémoire (m) d'un support électronique (C), tel qu'une carte amovible et portative, comprenant également un circuit de traitement (TC) et accouplée pour échanger des messages avec un appareil (1) comprenant un circuit de traitement (TM) et une mémoire (M) contenant ladite information déterminée (I), caractérisé en ce qu'il consiste:

– à générer dans l'appareil (1) un paramètre (a) représentatif de la position dans laquelle est inscrite l'information (I) dans la mémoire (m) du support électronique (C).

– à transmettre ce paramètre (a) représentatif de la position de mémoire au support électronique (C).

– à faire exécuter par les circuits de traitement du support électronique (C) et de l'appareil (1) un même programme (P) inaccessible de l'extérieur et préenregistré dans le support (C) et l'appareil (1), ce programme déroulant un algorithme prenant en compte au moins un paramètre corrélé à l'information (I) à certifier et le paramètre (a) représentatif de la position en mémoire dans le support électronique (C) de cette information (I) et aboutissant à un résultat (R) au niveau du support (C) et à un résultat (R′) au niveau de l'appareil (1),

– à comparer dans l'appareil (1) ou dans le support (C) les deux résultats (R, R′), l'identité de ces résultats (R, R′) prouvant la présence de l'information déterminée (I) dans la position de mémoire déterminée du support électronique (C).

2. Procédé selon la revendication 1, caractérisé en ce qu'il consiste à donner au paramètre corrélé à l'information (I) à certifier, la valeur de ladite information (I).

3. Procédé selon la revendication 1 ou 2, caractérisé en ce qu'il consiste à donner au paramètre (a) représentatif de la position de mémoire, la valeur de l'adresse mémoire de l'information (I) à certifier dans le support électronique (C).

4. Procédé selon l'une des revendications précédentes, caractérisé en ce qu'il consiste à faire également prendre en compte par l'algorithme précité un nombre aléatoire (E) soit fourni par le support électronique (C) et transmis à l'appareil (1), soit fourni par l'appareil (1) et transmis au support électronique (C).

5. Procédé selon l'une des revendications précédentes, caractérisé en ce qu'il consiste à faire également prendre en compte par l'algorithme précité, un code secret (S) préenregistré dans le support électronique (C) et dans l'appareil (1).

6. Procédé selon l'une des revendications précédentes, caractérisé en ce qu'il consiste à entrer dans un second support électronique amovible et portatif (C1) et depuis l'extérieur l'information (I) à certifier, ce second support électronique (C1) regroupant la mémoire (M) et le circuit de traitement (TM) de l'appareil (1).

**Patentansprüche**

1. Verfahren zum Bescheinigen der Anwesenheit einer bestimmten Information (I) in einer bestimmten Stellung eines Speichers (m) eines elektronischen Trägers (C) wie eine entfernbare und tragbare Karte, die ferner eine Verarbeitungsschaltung (TC) umfasst und derart angekoppelt ist, dass sie Nachrichten mit einem Gerät (1) austauscht, welches eine Verarbeitungsschaltung (TM) und einen Speicher (M) aufweist, der die genannte bestimmte Information (I) enthält, dadurch gekennzeichnet, dass es darin besteht:

– dass in dem Gerät (1) ein Parameter (a) erzeugt wird, welcher repräsentativ ist für die Position, in welcher die Information (I) in dem Speicher (m) des elektronischen Trägers (C) eingeschrieben ist;

– dass dieser Parameter (a), welcher repräsentativ für die Speicherposition ist, zu dem elektronischen Träger (C) übertragen wird;

– dass die Verarbeitungsschaltungen des elektronischen Trägers (C) und des Gerätes (1) veranlasst werden, dasselbe Programm (P) auszuführen, welches von der Aussenseite her unzugänglich und zuvor in den Träger (C) und das Gerät (1) eingespeichert ist, wobei dieses Programm einen Algorithmus abwickelt, der wenigstens einen Parameter berücksichtigt, welcher in Korrelation zu der zu bescheinigenden Information (I) steht, und den Parameter (a) berücksichtigt, welcher repräsentativ für die Speicherposition auf dem elektronischen Träger (C) dieser Information (I) ist, wobei zu einem Ergebnis (R) seitens des Trägers (C) und zu einem Ergebnis (R′) seitens des Gerätes (1) gelangt wird,

– das in dem Gerät (1) oder auf dem Träger (C) die zwei Ergebnisse (R, R′) verglichen werden und die Übereinstimmung dieser Ergebnisse (R, R′) die Anwesenheit der bestimmten Information (I) in der bestimmten Speicherposition des elektronischen Trägers (C) beweist.

2. Verfahren nach Anspruch 1, dadurch gekennzeichnet, dass es darin besteht, dem Parameter, der in Korrelation zu der zu bescheinigenden Information (I) steht, den Wert der genannten Information (I) zu geben.

3. Verfahren nach Anspruch 1 oder 2, dadurch gekennzeichnet, dass es darin besteht, dem Parameter (a), welcher repräsentativ für die Speicherposition ist, den Wert der Speicheradresse der zu bescheinigenden Information (I) in dem elektronischen Träger (C) zu geben.

4. Verfahren nach einem der vorstehenden Ansprüche, dadurch gekennzeichnet, dass es darin besteht, den vorgenannten Algorithmus zu veranlassen, weiterhin eine willkürliche Zahl (E) zu berücksichtigen, die entweder durch den elektronischen Träger (C) geliefert und zu dem Gerät (1) übertragen wird oder durch das Gerät (1) geliefert und zu dem elektronischen Träger (C) übertragen wird.

5. Verfahren nach einem der vorstehenden Ansprüche, dadurch gekennzeichnet, dass es darin besteht, den vorgenannten Algorithmus zu veranlassen, weiterhin einen geheimen Code (S) zu berücksichtigen, der zuvor auf dem elektronischen Träger (C) und in dem Gerät (1) aufgezeichnet wurde.

6. Verfahren nach einem der vorstehenden Ansprüche, dadurch gekennzeichnet, dass es darin besteht, in einen zweiten elektronischen entfernbaren und tragbaren Träger (C1) von der Aussenseite her die zu bescheinigende Information (I) zu übertragen, wobei dieser zweite elektronische Träger (C1) den Speicher (M) und die Verarbeitungsschaltung (TM) des Gerätes (1) vereinigt.

**Claims**

1. Method for certifying the presence of a particular item of information (I) in a particular position of a memory (m) of an electronic carrier (C) such as a removable and portable card, equally comprising a processing circuit (TC) and coupled for exchange of messages with an apparatus (1) comprising a processing circuit (TM) and a memory (M) containing the said particular item of information (I), characterised in that it consists:

– in generating within the apparatus (1) a parameter (a) representing the position in which is recorded the item of information (I) in the memory (m) of the electronic carrier (C),
– in transmitting this parameter (a) representing the memory position to the electronic carrier (C),
– in causing the processing circuits of the electronic carrier (C) and of the apparatus (1) to implement one and the same program (P) inaccessible from the outside and prerecorded in the carrier (C) and the apparatus (1), this program developing an algorithm making allowance for at least one parameter correlated with the item of information (I) which is to be certified and the parameter (a) representing the memory position in the electronic carrier (C) of this item of information (I) and yielding a result (R) at the level of the carrier (C) and a result (R') at the level of the apparatus (1),
– in comparing the two results (R, R') in the apparatus (1) or in the carrier (C), the identity of these results (R, R') proving the presence of the particular item of information (I) at the particular memory position of the electronic carrier (C).

2. Method according to claim 1, characterised in that it consists in imparting the value of the said item of information (1) to the parameter correlated with the item of information (I) which is to be certified.

3. Method according to claim 1 or 2, characterised in that it consists in imparting to the parameter (a) representing the memory position, the value of the memory address of the item of information (I) which is to be certified in the electronic carrier (C).

4. Method according to one of the preceding claims, characterised in that it consists in also causing the said algorithm to take into account an optional number (E) either provided by the electronic carrier (C) and transmitted to the apparatus (1), or provided by the apparatus (1) and transmitted to the electronic carrier (C).

5. Method according to one of the preceding claims, characterised in that it consists in also causing the said algorithm to take into account a secret code (S) prerecorded in the electronic carrier (C) and in the apparatus (1).

6. Method according to one of the preceding claims, characterised in that it consists in causing the item of information (I) which is to be certified to be entered in a second removable and portable electronic carrier (C1) from the outside, this second electronic carrier (C1) combining the memory (M) and the processing circuit (TM) of the apparatus (1).